(19) Europäisches Patentamt

European Patent Office

Office européen des brevets

(11) Veröffentlichungsnummer: **0 326 901**
**B1**

## (12) EUROPÄISCHE PATENTSCHRIFT

(45) Veröffentlichungstag der Patentschrift:
**31.10.90**

(21) Anmeldenummer: **89101137.1**

(22) Anmeldetag: **23.01.89**

(51) Int. Cl.⁵: **F04F 5/24**, F02G 5/02,
F01P 5/10, F22B 1/18

(54) Pulsierende Dampfstrahlpumpe mit Rückschlagventil.

(30) Priorität: **04.02.88 DE 8801397 U**

(43) Veröffentlichungstag der Anmeldung:
**09.08.89 Patentblatt 89/32**

(45) Bekanntmachung des Hinweises auf die Patenterteilung:
**31.10.90 Patentblatt 90/44**

(84) Benannte Vertragsstaaten:
**AT BE CH DE ES FR GB IT LI LU NL SE**

(56) Entgegenhaltungen:
**DE-A- 2 343 009**
**GB-A- 266 733**
**SU-A- 981 706**
**US-A- 1 823 154**

(73) Patentinhaber: **INTERATOM Gesellschaft mit beschränkter Haftung, Friedrich-Ebert-Strasse, D-5060 Bergisch-Gladbach 1(DE)**

(72) Erfinder: **Niemeyer, Wolfgang,**
**Albert-Einstein-Strasse 7, D-5060 Bergisch Gladbach 1(DE)**
Erfinder: **Pütz, Heinrich, Wellerscheid 2, D-5203 Much(DE)**

(74) Vertreter: **Fuchs, Franz-Josef, Dr.-Ing. et al, Postfach 22 13 17, D-8000 München 22(DE)**

## Beschreibung

Die vorliegende Erfindung betrifft eine Dampfstrahlpumpe nach dem Oberbegriff des 1. Anspruchs. Aud der IT-A-I 081 143 ist eine Dampfstrahlpumpe bekannt, die ein sich kegelförmig verjüngendes, mit seinem weiten Ende in die zu pumpende Flüssigkeit ragendes Rohr aufweist, das an seinem anderen Ende beheizt wird; die sich hier bildenden Dampfblasen entweichen periodisch (mit einer Frequenz in der Größenordnung von 50 Hz) aus dem Rohr und schieben dabei die im übrigen das Rohr füllende Flüssigkeit vor sich her, so die Pumpwirkung auslösend. In der wegen ihrer großen Masse im Ganzen verhältnismäßig kühl bleibenden Flüssigkeit kollabiert die Dampfblase und das Pumpenrohr füllt sich erneut mit Flüssigkeit. Für eine derartige Dampfstrahlpumpe wird bevorzugt eine Vorwendung zum Umpumpen des Kühlmittels einer Verbrennungskraftmaschine vorgeschlagen, wobei die zur Beheizung des Pumpenrohres erforderliche Wärme den Abgasen entnommen wird. Hierzu ragt dieses mit seinem dünnen Ende, das mit den Wärmeübergang verbessernden Mitteln wie Rippen versehen ist, in die Abgasleitung hinein.

Beim Zusammenfallen der Dampfblase wird erneut Flüssigkeit in das Pumprohr gesaugt; bei der in der genannten Druckschrift dargestellten Ausführung führt dies dazu, daß ein Teil der gerade erst beschleunigten Flüssigkeit durch die Sogwirkung wieder abgebremst wird, was zu einer Verschlechterung des Wirkungsgrades führt.

Aufgabe der vorliegenden Erfindung ist eine Verbesserung einer Dampfstrahlpumpe der beschriebenen Art dahingehend, daß die in jedem Zyklus das Pumprohr erneut füllende Flüssigkeit ausschließlich von der gewollten Saugseite der Pumpe her fließt, während ein Rückströmen der Flüssigkeit auf der Druckseite verhindert wird. Ebenso soll ein Rückströmen auf der Saugseite während der Pumpphase verhindert werden.

Die Lösung dieser Aufgabe erfolgt durch die im kennzeichnenden Teil des 1. Anspruchs angegebenen Mittel. Je nach Größe und örtlichen Gegebenheiten dur Pumpe kann es ausreichen, nur eines der Rückschlagventile vorzusehen, entweder auf der Saugseite oder bevorzugt zuf der Druckseite.

Die Ausgestaltung der Erfindung gemäß dem 2. Anspruch vereinfacht den Füllvorgang für das Pumprohr, indem dieser nicht so sehr durch eine Umkehr der Strömung, sondern dadurch bewerkstelligt wird, daß frische Flüssigkeit am dünnen Ende des Pumprohres angesaugt wird, so daß die Strömung in diesem, wenn auch intermittierend, im wesentlichen gleichgerichtet bleibt.

Gemäß der im 3. Anspruch vorgeschlagenen Ausgestaltung der Erfindung empfiehlt sich die Anordnung eines weiteren Rückschlagventils auch in dieser Umgehungsleitung, so daß sichergestellt ist, daß sich die infolge der Beheizung entwickelnde Dampfblase nur in der gewünschten Richtung ausbreitet.

Ein Ausführungsbeispiel der Erfindung ist in der Zeichnung dargestellt, und zwar zeigt

Figur 1 die eigentliche Pumpe im Längsaxialschnitt und

Figur 2 die Verschaltung derselben im Flüssigkeitskreislauf.

Die Pumpe besteht aus einem sich konisch verjüngenden Rohr 1, das an seinem engen Ende mit Rippen 2 versehen ist und hiermit in einer Leitung 3 angeordnet ist, in der ein Heizfluid, z. B. die Abgase einer Verbrennungskraftmaschine in der durch die Pfeile angedeuteten Richtung strömt. Die das Rohr 1 füllende Flüssigkeit, z. B. das Kühlwasser eben dieser Verbrennungs kraftmaschine wird dadurch bis über den Siedepunkt aufgeheizt, so daß sich schließlich eine Dampfblase bildet, die die Flüssigkeit aus dem Rohr 1 verdrängt. Diese strömt in ein Pumpengehäuse 4 und beschleunigt die dieses füllende Flüssigkeitsmasse in Pfeilrichtung, wodurch der Flüssigkeitskreislauf aufrechterhalten wird. Die Dampfblase kollabiert, sowie sie in den durch die zu pumpende Flüssigkeit auf einem verhältnismäßig kühlen Temperaturniveau gehaltenen Bereich nahe dem weiten Ende des Pumprohres 1 gelangt. Ein Entweichen der Dampfblase ohne daß eine nennenswerte Pumpwirkung auftritt, z. B. indem sich erstere infolge ihrer geringen Größe nur an der Oberseite des erweiterten Bereichs befindet, während an dessen Unterseite ein Gegenstrom von Flüssigkeit erfolgt, wird durch das Vorhandensein eines Verdrängungskörpers 5 verhindert. Der Vorgang des Zusammenfallens der Dampfblase wird dadurch unterstützt, daß sowohl dr Verdrängungskörper 5 als auch eine die Außenseiten des erweiterten Bereichs abdeckende Schicht 6 aus einem Material mit hohem Wärmespeichervermögen, z. B. aus Kupfer hergestellt sind. Die Körper 5, 6 befinden sich durch die Benetzung mit der zu fördernden Flüssigkeit zunächst auf einem verhältnismäßig niedrigen Temperaturniveau; wird die Flüssigkeit durch die Dampfblase verdrängt, entziehen diese Körper 5, 6 derselben eine erhöhte Wärmemenge, wodurch die Kondensation beschleunigt wird. Strömt dann erneut Flüssigkeit ein, entzieht diese den Körpern 5, 6 die zuvor aufgenommene Wärme. Eine Isolierschicht 7 verhindert eine erhöhten Wärmeaustausch mit der Umgebung.

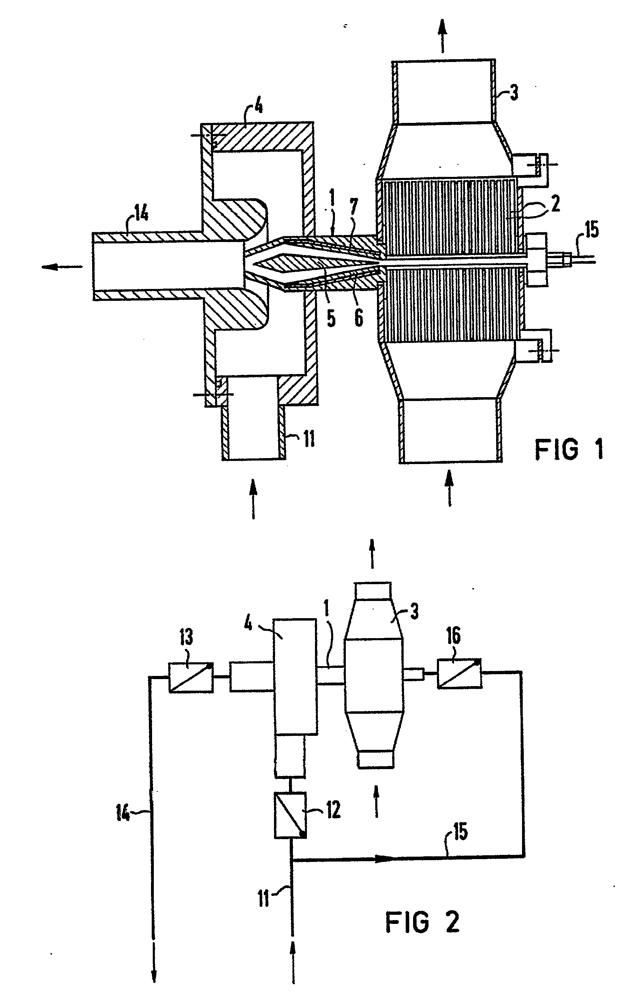

Der Zustrom der Flüssigkeit zur Pumpe 4 erfolgt (siehe Figur 2) über eine Leitung 11, in die ein erstes Rückschlagventil 12 eingebaut ist, das sicherstellt, daß durch die Verdrängung der Flüssigkeit aus dem Pumpenrohr 1 keine Rückströmung in der Leitung 11 auftritt. Ebenso verhindert ein zweites Rückschlagventil 13 in einer weiteren, dem Abfluß der Flüssigkeit dienenden Leitung 14 den umgekehrten Effekt, nämlich daß in dieser ebenfalls eine Rückströmung eintritt, wenn durch den Kollaps der Dampfblase im Pumpenrohr 1 erneut Flüssigkeit in dieses strömt. Das Wiederauffüllen der Flüssigkeit in dem beheizten Bereich des Pumpenrohres 1 erfolgt zweckmäßigerweise über eine von der Zuleitung 11 abzweigende Umgehungsleitung 15, die in das enge Ende desselben mündet, wobei ein drittes Rückschlagventil 16 dafür sorgt, daß auch hier keine Rückströmung eintreten kann, etwa durch den Druck der sich bildenden Dampfblase.

**Patentansprüche**

1. Pulsierende Dampfstrahlpumpe mit einem kegelförmig sich verjüngenden Pumprohr (1), das mit seinem offenen weiten Ende in eine Leitung (4, 14) für die zu pumpende Flüssigkeit ragt, **dadurch gekennzeichnet**, daß die Leitung (14) enweder
vor und hinter der Pumpe (4) mit jeweils einem Rückschlagventil (12, 13) oder
vor der Pumpe (4) mit einem Rückschlagventil (12) oder
hinter der Pumpe (4) mit einem Rückschlagventil (13) versehen ist.

2. Pumpe nach Anspruch 1, **dadurch gekennzeichnet**, daß eine vor dem ersten Rückschlagventil (12) abzweigende, in das enge Ende des Pumprohres (1) mündende Umgehungsleitung (15) vorhanden ist.

3. Pumpe nach Anspruch 2, **dadurch gekennzeichnet**, daß die Umgehungsleitung (15) mit einem dritten Rückschlagventil (16) versehen ist.

**Claims**

1. A pulsating steam jet pump with a cone-shaped tapering pump tube (1), which projects with its open wide end into a line (4, 14) for the liquid to be pumped, characterised in that the line (14) is provided either
in front of and behind the pump (4) with in each case a non-return valve (12, 13) or
in front of the pump (4) with a non-return valve (12) or
behind the pump (4) with a non-return valve (13).

2. A pump according to claim 1, characterised in that a by-pass line (15) opening into the narrow end of the pump tube (1) and branching in front of the first non-return valve (12) is present.

3. A pump according to claim 2, characterised in that the by-pass line (15) is provided with a third non-return valve (16).

**Revendications**

1. Ejecteur à vapeur pulsatoire, comprenant un tube d'éjecteur (1) qui se rétrécit coniquement et dont l'extrémité large ouverte pénètre dans un conduit (4, 14) pour le liquide à pomper, caractérisé en ce que le conduit (14) est muni
de clapets anti-retour (12, 13) en amont et en aval de l'éjecteur (4),
ou bien d'un clapet anti-retour (12) en amont de l'éjecteur (4),
ou bien d'un clapet anti-retour (13) en aval de l'éjecteur (4).

2. Ejecteur suivant la revendication 1, caractérisé en ce qu'il est prévu un conduit de dérivation (15), qui bifurque en amont du premier clapet anti-retour (12) et qui débouche dans l'extrémité étroite du tube d'éjecteur (1).

3. Ejecteur suivant la revendication 2, caractérisé en ce que le conduit de dérivation (15) est muni d'un troisième clapet anti-retour (16).

FIG 1

FIG 2